# EUROPEAN PATENT SPECIFICATION

(11) **EP 3 629 672 B1**
(45) Date of publication and mention of the grant of the patent: **31.05.2023**
(21) Application number: 19188349.5
(22) Date of filing: 25.07.2019
(51) Int. Cl.: H04W 76/28, H04W 60/04, H04W 4/14, H04W 8/18

(54) **MULTIPLE SUBSCRIBER MANAGEMENT IN USER DEVICE**
VERWALTUNG MEHRERER TEILNEHMER IN EINER BENUTZERVORRICHTUNG
GESTION D'ABONNÉS MULTIPLES DANS UN DISPOSITIF UTILISATEUR

(30) Priority: 28.09.2018 US 201862738008 P
(43) Date of publication of application: 01.04.2020
(73) Proprietor: Apple Inc., Cupertino, CA 95014 (US)
(72) Inventor: RYSGAARD, Bent Henneberg, 9220 Aalborg (DK); BHASIN, Sheetal, 560048 Bangalore, KA (IN)
(74) Representative: Lang, Johannes

(56) References cited:
- EP-A1- 2 874 450
- WO-A1-2014/000650
- WO-A1-2014/071213
- WO-A1-2018/053312
- US-B1- 8 934 460
- US-B2- 9 198 183

## Description

### Technical Field

Various embodiments relate generally to methods and devices for maintaining service in multi-SIM devices.

### Background

It is known for certain user devices to be configurable to operate according to multiple subscribers, such as, for example, in the context of dual Subscriber Identity Module ("SIM") phone. Often depending on the available hardware, such as the number of transceivers relative to the number of installed SIMs, various protocols are available for managing multiple SIMs within the same user device. One such protocol is known as Dual-SIM Dual Standby ("DSDS"), is a protocol for management of two subscribers with a single transceiver. When operating according to DSDS, a user device may switch from receiving a transmission according to a first subscriber to operating according to a second subscriber based on a priority communication initiated on the second subscriber. During the operation on the second subscriber, the user device will be unable to receive from or transmit to the network corresponding to the first subscriber. The network for the first subscriber may assume that the user device has moved outside of a coverage zone, which may ultimately lead to a state mismatch between the user device and the network. The current methods of recovering from such a state mismatch are typically slow and may delay further communication with the first subscriber for an extended period.

US 9198183 B2 relates to accommodating multi-SIM-multi-standby communication device tuneaway events at a communication network base station. The document teaches that the NodeB determines that the first subscription's silence is a result of a tuneaway by monitoring the UL signal strength or by monitoring the UE's transmit power.

WO 2018/053312 A1 relates to apparatuses and methods for a wireless communication device having a first Subscriber Identity Module (SIM) and a second SIM to manage communication via the first SIM and the second SIM. The document discloses an action of updating tracking area triggered by the new tracking area being the same as the initial tracking area.

EP 2 874 450 A1 relates to methods for call management with multiple subscriber identity cards and apparatuses using the same. The document is silent regarding the concepts of tracking area update and a routing area update.

WO 2014/000650 A1 relates to enhancing of suspending and resuming UE data in mobile communication networks. The document is silent regarding the concepts of tracking area update and a routing area update.

### Summary

The invention is defined by the independent claims. Preferred embodiments of the invention are stipulated in the dependent claims.

### Brief Description of the Drawings

In the drawings, like reference characters generally refer to the same parts throughout the different views. The drawings are not necessarily to scale, emphasis instead generally being placed upon illustrating the principles of the Disclosure. In the following description, various aspects of the Disclosure are described with reference to the following drawings, in which:
- FIG. 1 depicts a multiple subscriber user device according to an aspect of the disclosure;
- FIG. 2 depicts the correction of a state mismatch on a first subscriber module following a call on a second subscriber module;
- FIG. 3 depicts the correction of a state mismatch on a first subscriber module following a message on a second subscriber module; and
- FIG. 4 shows a method of subscriber management.

### Description

The following detailed description refers to the accompanying drawings that show, by way of illustration, specific details and aspects in which the Disclosure may be practiced.

The word "exemplary" is used herein to mean "serving as an example, instance, or illustration." Any embodiment or design described herein as "exemplary" is not necessarily to be construed as preferred or advantageous over other embodiments or designs.

The words "plural" and "multiple" in the description and the claims expressly refer to a quantity greater than one. Accordingly, any phrases explicitly invoking the aforementioned words (e.g. "a plurality of [objects]", "multiple [objects]") referring to a quantity of objects expressly refers more than one of the said objects. The terms "group (of)", "set [of]", "collection (of)", "series (of)", "sequence (of)", "grouping (of)", etc., and the like in the description and in the claims, if any, refer to a quantity equal to or greater than one, i.e. one or more. The terms "proper subset", "reduced subset", and "lesser subset" refer to a subset of a set that is not equal to the set, i.e. a subset of a set that contains less elements than the set.

A "circuit" as user herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit ("CPU"), Graphics Processing Unit ("GPU"), Digital Signal Processor ("DSP"), Field Programmable Gate Array ("FPGA"), integrated circuit, Application Specific Integrated Circuit ("ASIC"), etc., or any combination thereof. Any other kind of implementation of the respective functions which will be described below in further detail may also be understood as a "circuit." It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit.

As used herein, "memory" may be understood as a non-transitory computer-readable medium in which data or information can be stored for retrieval. References to "memory" included herein may thus be understood as referring to volatile or nonvolatile memory, including random access memory ("RAM"), read-only memory ("ROM"), flash memory, solid-state storage, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component comprising one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

The term "base station" used in reference to an access point of a mobile communication network may be understood as a macro base station, micro base station, Node B, evolved NodeB ("Enb"), Home eNodeB, Remote Radio Head ("RRH"), relay point, etc., and may include base stations implemented with conventional base station architectures (e.g. distributed, "all-in-one", etc.) and base stations implemented with centralized base stations architectures (e.g. Cloud Radio Access Network ("Cloud-RAN") or Virtual RAN ("Vran")). As used herein, a "cell" in the context of telecommunications may be understood as a sector served by a base station. Accordingly, a cell may be a set of geographically co-located antennas that correspond to a particular sectorization of a base station. A base station may thus serve one or more cells (or sectors), where each cell is characterized by a distinct communication channel. Furthermore, the term "cell" may be utilized to refer to any of a macrocell, microcell, femtocell, picocell, etc.

For purposes of this disclosure, radio communication technologies may be classified as one of a Short-Range radio communication technology, Metropolitan Area System radio communication technology, or Cellular Wide Area radio communication technology. Short Range radio communication technologies include Bluetooth, WLAN (e.g. according to any IEEE 802.11 standard), and other similar radio communication technologies. Metropolitan Area System radio communication technologies include Worldwide Interoperability for Microwave Access ("WiMax") (e.g. according to an IEEE 802.16 radio communication standard, e.g. WiMax fixed or WiMax mobile) and other similar radio communication technologies. Cellular Wide Area radio communication technologies include GSM, UMTS, LTE, LTE-Advanced ("LTE-A"), CDMA, WCDMA, LTE-A, General Packet Radio Service ("GPRS"), Enhanced Data Rates for GSM Evolution ("EDGE"), High Speed Packet Access ("HSPA"), HSPA Plus ("HSPA+"), and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies. It is understood that exemplary scenarios detailed herein are demonstrative in nature, and accordingly may be similarly applied to various other mobile communication technologies, both existing and not yet formulated, particularly in cases where such mobile communication technologies share similar features as disclosed regarding the following examples.

The term "network" as utilized herein, e.g. in reference to a communication network such as a mobile communication network, encompasses both an access section of a network (e.g. a radio access network ("RAN") section) and a core section of a network (e.g. a core network section). The term "radio idle mode" or "radio idle state" used herein in reference to a mobile terminal refers to a radio control state in which the mobile terminal is not allocated at least one dedicated communication channel of a mobile communication network. The term "radio connected mode" or "radio connected state" used in reference to a mobile terminal refers to a radio control state in which the mobile terminal is allocated at least one dedicated uplink communication channel of a mobile communication network.

Unless explicitly specified, the term "transmit" encompasses both direct (point-to-point) and indirect transmission (via one or more intermediary points). Similarly, the term "receive" encompasses both direct and indirect reception. The term "communicate" encompasses one or both of transmitting and receiving, i.e. unidirectional or bidirectional communication in one or both of the incoming and outgoing directions.

The user device may be capable of housing and operating according to a plurality of SIMs. For example, many smart phones have multiple slots or ports for SIMs and may operate according to one or more protocols for managing the multiple SIMs. One such protocol is DSDS.

In a DSDS scenario, the user device may be equipped to receive two SIMs, and both SIMs may be available in standby mode for receiving data or calls. Depending on the implementation, once a call or a data transfer begins on one SIM, the second SIM may potentially become unavailable to the network. Alternatively, the second SIM may still be "available" and monitoring paging channels, but not allowed to make or answer calls toward network unless the call on the first SIM is first released, whether locally or by the network. When the user device is operating according to a first SIM, such as receiving a download on the first SIM, and a priority call or transmission is initiated on the second SIM, the device may have to switch from the first SIM to the second SIM immediately, and without completing a handshake. As such, the network may be unaware of the device's status. Moreover, the network may expect a future transmission or confirmation from the device, and if said transmission or confirmation is not received, the network may assume that the device has moved out of the network area. In this case, the network may stop retransmitting, and therefore the upper layer data may become stuck at lower layers. Performing a RAU or TAU may trigger the data to be re-transmitted on the downlink again, or it may trigger the network to resume sending new data packages, which may restore the data session.

This may result in a state mismatch.

It is also possible to miss one or more messages from network on the first SIM during active used of the second SIM. This too may result in a state mismatch.

The mismatch can happen at any level of protocol, at access stratum (NodeB, eNodeB), Non-access stratum (Core network), IMS servers.

Recovery from this type of state mismatch is often less than ideal. In most cases, the user device and network timers timeout, which prompts them to re-sync. The duration of this procedure is dependent on various factors, and may be determined by the network, but a restoration of service following a return to a first SIM after an abrupt change to a second SIM may take, for example, sixty seconds or more. This generally results in a call and data throughput performance dip.

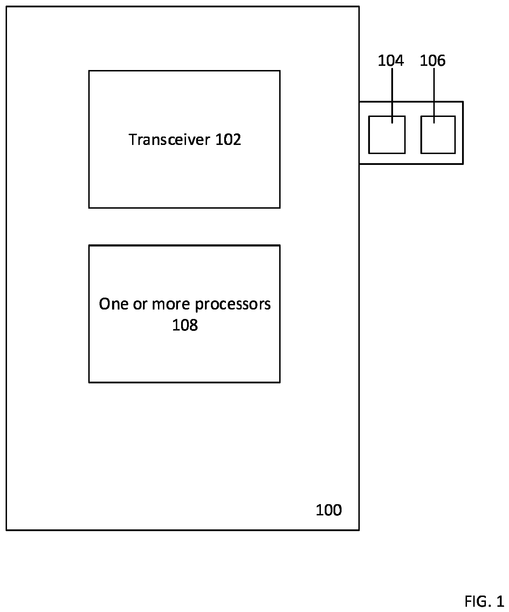

FIG. 1 depicts a user device 100 comprising a transceiver 102, configured to operate according to a first subscriber 104 or a second subscriber 106; and one or more processors 108, configured to control the transceiver to discontinue receiving a wireless transmission for the first subscriber 104 and to transmit a wireless transmission for the second subscriber 106; return operation of the transceiver 102 to the first subscriber 104; and transmit a status message to a network corresponding to the first subscriber. Although the subscriber modules are depicted herein as being integrated circuit modules in the form of Subscriber Identity Modules, the subscribe modules are not limited to integrated circuit modules and may take any form whatsoever. According to one aspect of the disclosure, the subscriber modules may be software, which may be stored, such as, for example, within a memory of the user device. According to another aspect of the disclosure, the subscriber modules may be embedded subscriber identity modules (eSIM), which may be integrated into the user device.

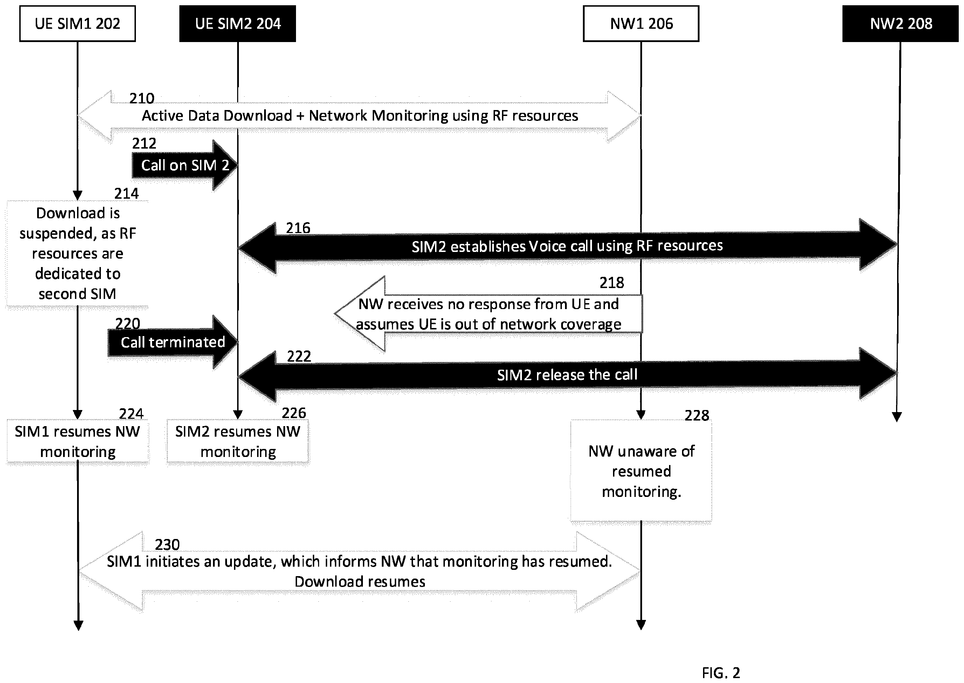

FIG. 2 depicts a communication diagram between a user device with a first SIM 202 and a second SIM 204 and a first network 206 and a second network 208. In this case, the user device may begin operating according to the first SIM 202, which is connected to the first network 206, during which the first SIM 202 generally performs network monitoring and eventually begins a data download 210. During the course of the data download, the user initiates a call on the second SIM 204 as shown in 212. The second call may be regarded as a priority event with respect to the data download, and therefore the data download may be quickly terminated, such that the transceiver may be switched to the second SIM 204, and the user call may begin on the second SIM 212. During the user call on the second SIM 204, the first SIM 202 cannot receive the data download because the radiofrequency resources are dedicated to the second SIM 204. During this time, it is not possible to monitor the network corresponding to the first SIM 202. The call may be carried out on the second SIM 204 with the second network 208, as displayed in 216. During this time, however, the first network 206 continues to transmit data as part of the data downloaded 210. However, the first network 206 does not receive a response from the user device, because the user device's radiofrequency resources are dedicated to the second network 208. When the first network 206 does not receive a response, it ultimately assumes that the user device has left the area of network coverage 218 and stops retransmission. Eventually, the user may terminate the call on the second SIM 204, as shown in 220. The second network 208 will then release the call 222. With the call being released, the user device will begin network monitoring for both the first SIM 202 and the second SIM 204, as shown in 224 and 226. At this point, a state mismatch is present, as the user device is monitoring the network for SIM one, but the network is unaware that the monitoring has resumed, as the network is still under the belief that the device is outside of the network area 228. Conventional resolution of the state mismatch involves allowing one or more timers to a lapse, at which time the network and user device will attempt a resynchronization for the first network 206 with respect to the first SIM 202, as shown in 228. This process may be significantly expedited by causing the user device to transmit to the first network 206 an update procedure 230, such as a tracking area update or a routing area update, which effectively informs the first network 206 that the user device and the first SIM 202 are monitoring the network once again. This permits the network to allocate the data bearers and begin again or resume the data transmission.

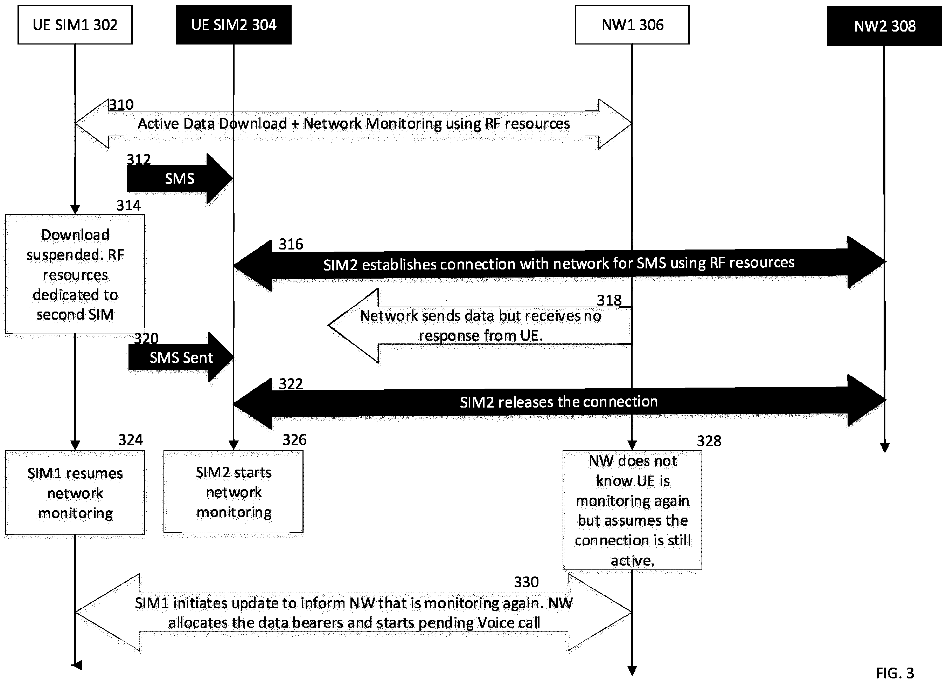

FIG. 3 depicts a communication diagram between a user device with a first SIM 302 and a second SIM 304 and a first network 306 and a second network 308. In this case, the user device may begin operating according to the first SIM 302, which is connected to the first network 306, during which the first SIM 302 generally performs network monitoring and eventually begins a data download 310. During the course of the data download, the user initiates an SMS or other message on the second SIM 304 as shown in 312. The SMS may be regarded as a priority event with respect to the data download, and therefore the data download may be quickly terminated, such that the transceiver may be switched to the second SIM 304, and the SMS may be sent on the second SIM 312. During the SMS transmission on the second SIM 304, the first SIM 302 cannot receive the data download because the radio frequency resources are dedicated to the second SIM 304. During this time, it is not possible to monitor the network corresponding to the first SIM 302. The SMS may be carried out on the second SIM 304 with the second network 308, as displayed in 316. During this time, however, the first network 306 continues to transmit data as part of the data downloaded 310. However, the first network 306 does not receive a response from the user device, because the user device's radiofrequency resources are dedicated to the second network 308. The user device will begin network monitoring for both the first SIM 302 and the second SIM 304, as shown in 324 and 326. The first network 306 is not aware that the user device is monitoring on the first SIM 302, and the first SIM 302 will be waiting for a paging message, which the network may not know to provide. In the event, for example, that the first network 306 receives a voice call for the first SIM 302, the network may try to establish the voice call for the first SIM 302, assuming a connected mode. The user device will not respond to the attempt to establish a voice call because the user device is in idle mode and is waiting for a paging message. Re-syncing can be triggered by causing the user device to transmit to the first network 206 an update procedure 230, such as a tracking area update or a routing area update, which effectively informs the first network 206 that the user device and the first SIM 202 are monitoring the network once again. This permits the network to allocate the data bearers and begin again or resume the download.

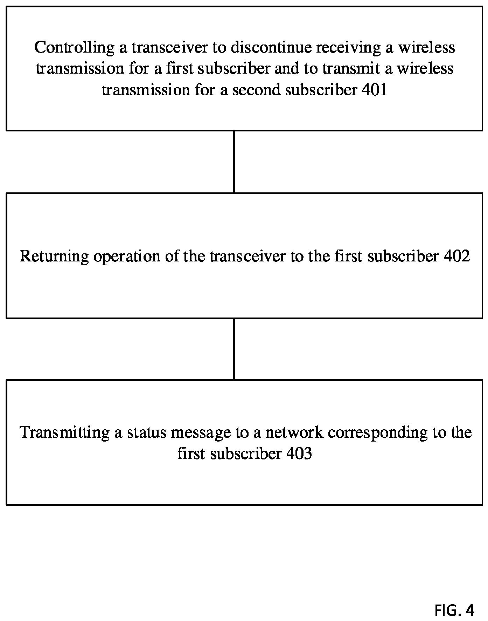

FIG. 4 depicts a method of subscriber management comprising controlling a transceiver to discontinue receiving a wireless transmission for a first subscriber and to transmit a wireless transmission for a second subscriber 401; returning operation of the transceiver to the first subscriber 402; and transmitting a status message to a network corresponding to the first subscriber 403.

User devices may be configured to operate according to a plurality of subscribers. A subscriber may refer to an account and/or identification for use with a radio access technology. A conventional manner of designating a subscriber is to insert within the user device a SIM for a particular subscriber. A SIM may comprise an integrated circuit on which the international mobile subscriber identity (IMSI) and/or a related key is stored. The SIM it may be used to authenticate an account for use on a particular radio access technology. Although use of a SIM for subscriber selection is a conventional method for designating a subscriber, the methods and principles disclosed herein are not dependent on the use of a SIM, and may be implemented with any method of designating a subscriber, without limitation.

A multiple subscriber user device may be configured to operate according to a plurality of subscribers. In some circumstances, the multiple subscriber user device may be configured with a plurality of ports, which may accept subscriber identifiers, such as multiple SIM cards. The multiple subscriber user device may be any kind of user device whatsoever including, but not limited to, a mobile phone, a smart phone, a tablet computer, a laptop computer, or any type of device whatsoever that may be configured to operate according to one or more radio access technologies.

A multiple subscriber user device may adopt one or more protocols for management of the multiple subscriber IDs. Under some circumstances, the number of transceivers in the user device may be fewer than the number of subscribers configured to operate on the device. When this occurs, the device may employ one or more protocols for switching the one or more transceivers between the available subscribers.

One known method of managing multiple subscribers, wherein the number of transceivers is fewer than the number of subscribers, is known as DSDS. During DSDS, two subscribers may operate with a single transceiver, such that both subscribers may be able to receive network Pings or notifications; however, when one subscriber actively transmits or receives data, the other subscriber becomes unavailable.

During certain subscriber management protocols, including but not limited to DSDS, a first subscriber may begin receiving a data transmission from a network associated with the first subscriber. During the data transmission, a user may initiate an action with respect to the second subscriber. This action may be, for example, placement of a call or sending of a message. Said actions may be regarded as having a higher priority than the data transmission being received on the first subscriber, and therefore the user device may transition control of the transceiver from the first subscriber to the second subscriber. Where this occurs, the received data transmission on the first subscriber may be interrupted. The interruption of the received transmission on the first subscriber occurs without a network handshake or without any other communication to inform the network of the subscriber change.

When the user device controls the transceiver to discontinue operating according to the first subscriber, and to begin operating according to the second subscriber, and thereby interrupts the received data transmission, the user device becomes unavailable for the first subscriber. The network associated with the first subscriber will likely continue to attempt the download, and will expect various acknowledgment messages from the user device. The user device, however, will be unable to receive the continued data transmission, and the user device will be unable to transmit the expected acknowledgment. If the network associated with the first subscriber does not receive the expected acknowledgment, the network may assume that the device associated with the first subscriber has moved out of range or is otherwise unavailable.

Once the user device completes the task associated with the second subscriber, such as, for example, concluding the call or the sending of the message, the user device may return to a standby mode, in which both subscribers are available to receive network messages. In this state, the first subscriber would be able to resume receipt of the data transmission; however, the network associated with the first subscriber may still be under the assumption that the first subscriber is unavailable. This results in a state mismatch.

A conventional method of resolving the state mismatch is to wait until expiration of one or more of the user device timer and/or network timer. At the expiration of the timer or timers, the user device and network may re-synchronize, and the state mismatch will conclude. These timers may, however, be rather lengthy. For example, the network timer may potentially be one minute or more. Under this circumstance, the first subscriber becomes unavailable for the user device for the minute or more, until the network timer elapses.

The state mismatch can be corrected much sooner by causing the user device to transmit for the first subscriber a status update. The status update may be any status update that causes resolution of the state mismatch. According to one aspect of the disclosure, the status update may be a Tracking Area Update message. According to another aspect of the disclosure, the status update may be a Routing Area Update message.

According to one aspect of the disclosure, network service for the first SIM may be restored sooner by forcing a location update when the interrupted SIM is resumed. The location update may be an update informing the network of a region of the user device that is associated with a base station. For example, the location update may be a Routing Area Update in a 2G 3G context, or a Tracking Area Update in a 4G or 5G context. It is expressly anticipated that such a location update may be performed on any other RAT, including, but not limited to successor RATs to 5G. As part of the location update, the user device may transmit information related to the user device's function, such as, but not limited to, user device capabilities, Packet Data contexts, Packet Data Network contexts, IP Multimedia Subsystem states, packet data network states, and/or location with respect to the network or a base station.

By issuing a location update, the user device may prompt the network to re-synch the network and the user device, such that service can be re-established before it would otherwise be established from elapsing of the relevant timer in the method described above. This method may improve the data throughput performance and the mobile terminated call performance for the DSDS device.

According to one aspect of the disclosure, when service is transferred from a first SIM to a second SIM, the first SIM is aware of the interruption and remembers that the proper handshake with the network did not occur before clearing the context. The detection can happen at the non-access stratum or at the access stratum. The condition may be indicated to the non-access stratum. Upon resumption of services on the interrupted SIM, the non-access stratum shall trigger a location update with the network. Such a location update may occur even when the conditions for the update are not met. For example, user device may perform a Routing Ares Update where the requirements for the update are not fulfilled according to 3GPP. Similarly, the user device may perform a Tracking Area Update where the requirements for the update are not fulfilled according to 3GPP.

By performing the location update, the user device information is updated with the network. This may include user device data such as capabilities, Packet Data contexts, Packet Data Network contexts, IMS PDN states, and location with respect to the network. The result is that the user device in the network may be brought into sync immediately. This may permit the user device to resume downloading on the first subscriber. It may allow the user device to resume communication with the radio access technology corresponding to the first subscriber more rapidly than would be achieved by waiting for the expiration of a network timer.

While the disclosure has been particularly shown and described with reference to specific aspects, it should be understood by those skilled in the art that various changes in form and detail may be made therein without departing from the scope of the disclosure as defined by the appended claims. The scope of the disclosure is thus indicated by the appended claims.

## Claims

1. A user equipment (100) comprising:
a single transceiver (102), configured to operate according to a Dual SIM Dual Standby, DSDS, protocol; and
one or more processors (108), configured to:
control (401) the single transceiver (102) to discontinue receiving a first wireless transmission from a first wireless network associated with a first subscriber identity module, SIM (104), without a network handshake with the first wireless network, and to transmit a second wireless transmission to a second wireless network associated with a second SIM (106);
in response to the second SIM (106) terminating the second wireless transmission and returning (402) operation of the single transceiver (102) to the first SIM (104), start network monitoring for both the first SIM (104) and the second SIM (106); and
in response to said starting network monitoring, reestablish a connection to the first wireless network by performing a tracking area update, TAU, or a routing area update, RAU, with respect to the first wireless network, wherein said performing the TAU or the RAU initiates resolution of a state mismatch between the first SIM (104) and the first wireless network, wherein the state mismatch is a mismatch between an actual state of network monitoring by the first SIM (104) and an assumed state held by the first wireless network.

2. The user equipment (100) of claim 1, wherein the one or more processors (108) are further configured to receive a remainder of the first wireless transmission after performing the TAU or the RAU.

3. The user equipment (100) of claim 1, wherein the one or more processors (108) are further configured to resume the first wireless transmission after performing the TAU or the RAU.

4. The user equipment (100) of any one of claims 1 to 3, wherein the first SIM (104) and the second SIM (106) are embedded SIMS.

5. The user equipment (100) of claim 4, wherein said starting network monitoring includes starting page monitoring for pages from the first wireless network.

6. The user equipment (100) of any one of claims 3 to 5, wherein said performing the TAU or the RAU comprises performing TAU.

7. The user equipment (100) of any one of claims 1 to 6, wherein said performing the TAU or the RAU comprises performing the RAU.

8. The user equipment (100) of any one of claims 1 to 7, wherein the assumed state represents an assumption by the first wireless network that the user equipment (100) is out of coverage of a first base station of the first wireless network.

9. The user equipment (100) of claim 1, wherein said transmitting the second wireless transmission comprises placing a voice call, sending a text message, sending an SMS, or any combination thereof.

10. The user equipment (100) of any one of claims 1 to 8, wherein said controlling the single transceiver (102) comprises changing operation from the first SIM (104) to the second SIM (106).

11. The user equipment (100) of claim 10, wherein said controlling the single transceiver (102) to change operation triggers the state mismatch.

12. The user equipment (100) of any one of claims 1 to 8, wherein said reestablishing the connection to the network comprises restarting lower layer protocols to resend existing data associated with the first SIM (104).

13. The user equipment (100) of any one of claims 1 to 8, wherein said reestablishing the connection to the network is performed using an existing context from the first wireless transmission for the first SIM (104).

14. A method of subscriber management according to a Dual SIM Dual Standby, DSDS, protocol in a user equipment, UE, device (100) having a single transceiver (102), the method comprising:
controlling (401) the single transceiver (102) to discontinue receiving a first wireless transmission from a first wireless network associated with a first subscriber identity module, SIM (104), without a network handshake with the first wireless network, and to transmit a second wireless transmission to a second wireless network associated with a second SIM (106);
in response to the second SIM (106) terminating the second wireless transmission and returning (402) operation of the single transceiver (102) to the first SIM (104), starting network monitoring for both the first SIM (104) and the second SIM (106); and
in response to said starting network monitoring, reestablishing a connection to the first wireless network by performing a tracking area update, TAU, or a routing area update, RAU, with respect to the first wireless network, wherein said performing the TAU or the RAU initiates resolution of a state mismatch between the first SIM (104) and the first wireless network, wherein the state mismatch is a mismatch between an actual state of network monitoring by the first SIM (104) and an assumed state held by the first wireless network.

15. A non-transitory computer readable medium storing instructions for performing subscriber management according to a Dual SIM Dual Standby, DSDS, protocol in a user equipment, UE, device (100) having a single transceiver (102), wherein the instructions, when executed by one or more processors (108), cause the one or more processors (108) to perform:
controlling (401) the single transceiver (102) to discontinue receiving a first wireless transmission from a first wireless network associated with a first subscriber identity module, SIM (104), without a network handshake with the first wireless network, and to transmit a second wireless transmission to a second wireless network associated with a second SIM (106);
in response to the second SIM (106) terminating the second wireless transmission and returning (402) operation of the single transceiver (102) to the first SIM (104), starting network monitoring for both the first SIM (104) and the second SIM (106); and
in response to said starting network monitoring, reestablishing a connection to the first wireless network by performing a tracking area update, TAU, or a routing area update, RAU, with respect to the first wireless network, wherein said performing the TAU or the RAU initiates resolution of a state mismatch between the first SIM (104) and the first wireless network, wherein the state mismatch is a mismatch between an actual state of network monitoring by the first SIM (104) and an assumed state held by the first wireless network.

## Patentansprüche

1. Benutzervorrichtung (100), umfassend:
einen einzelnen Sendeempfänger (102), der konfiguriert ist, um gemäß einem Dual-SIM-Dual-Standby-, DSDS-, Protokoll zu arbeiten; und
einen oder mehrere Prozessoren (108), die konfiguriert sind zum:
Steuern (401) des einzelnen Sendeempfängers (102), um das Empfangen einer ersten drahtlosen Übertragung von einem ersten drahtlosen Netzwerk, das mit einem ersten Teilnehmeridentitätsmodul, SIM (104), assoziiert ist, ohne einen Netzwerk-Handshake mit dem ersten drahtlosen Netzwerk einzustellen, und um eine zweite drahtlose Übertragung an ein zweites drahtloses Netzwerk zu übertragen, das mit einem zweiten SIM (106) assoziiert ist;
als Reaktion darauf, dass das zweite SIM (106) die zweite drahtlose Übertragung beendet und den Betrieb des einzelnen Sendeempfängers (102) an das erste SIM (104) zurückgibt (402), Starten der Netzwerküberwachung sowohl für das erste SIM (104) als auch für das zweite SIM (106); und
als Reaktion auf das Starten der Netzwerküberwachung, Wiederherstellen einer Verbindung mit dem ersten drahtlosen Netzwerk durch Durchführen einer Verfolgungsbereichsaktualisierung (tracking area update), TAU, oder einer Routingbereichsaktualisierung (routing area update), RAU, in Bezug auf das erste drahtlose Netzwerk, wobei das Durchführen der TAU oder der RAU die Auflösung einer Zustandsfehlanpassung zwischen dem ersten SIM (104) und dem ersten drahtlosen Netzwerk einleitet, wobei die Zustandsfehlanpassung eine Fehlanpassung zwischen einem tatsächlichen Zustand der Netzwerküberwachung durch das erste SIM (104) und einem angenommenen Zustand ist, der durch das erste drahtlose Netzwerk gehalten wird.

2. Benutzergerät (100) nach Anspruch 1, wobei der eine oder die mehreren Prozessoren (108) ferner konfiguriert sind, um einen Rest der ersten drahtlosen Übertragung nach dem Durchführen der TAU oder der RAU zu empfangen.

3. Benutzergerät (100) nach Anspruch 1, wobei der eine oder die mehreren Prozessoren (108) ferner konfiguriert sind, um die erste drahtlose Übertragung nach dem Durchführen der TAU oder der RAU wiederaufzunehmen.

4. Benutzergerät (100) nach einem der Ansprüche 1 bis 3, wobei das erste SIM (104) und das zweite SIM (106) eingebettete SIMS sind.

5. Benutzergerät (100) nach Anspruch 4, wobei das Starten der Netzwerküberwachung das Starten der Seitenüberwachung für Seiten aus dem ersten drahtlosen Netzwerk beinhaltet.

6. Benutzergerät (100) nach einem der Ansprüche 3 bis 5, wobei das Durchführen der TAU oder der RAU ein Durchführen der TAU umfasst.

7. Benutzergerät (100) nach einem der Ansprüche 1 bis 6, wobei das Durchführen der TAU oder der RAU ein Durchführen der RAU umfasst.

8. Benutzergerät (100) nach einem der Ansprüche 1 bis 7, wobei der angenommene Zustand eine Annahme durch das erste drahtlose Netzwerk darstellt, dass das Benutzergerät (100) außerhalb der Abdeckung einer ersten Basisstation des ersten drahtlosen Netzwerks ist.

9. Benutzergerät (100) nach Anspruch 1, wobei das Übertragen der zweiten drahtlosen Übertragung ein Tätigen eines Sprachanrufs, ein Senden einer Textnachricht, ein Senden einer SMS oder eine beliebige Kombination davon umfasst.

10. Benutzergerät (100) nach einem der Ansprüche 1 bis 8, wobei das Steuern des einzelnen Sendeempfängers (102) ein Ändern des Betriebs vom ersten SIM (104) zum zweiten SIM (106) umfasst.

11. Benutzergerät (100) nach Anspruch 10, wobei das Steuern des einzelnen Sendeempfängers (102) zum Ändern des Betriebs die Zustandsfehlanpassung auslöst.

12. Benutzergerät (100) nach einem der Ansprüche 1 bis 8, wobei das Wiederherstellen der Verbindung zum Netzwerk ein Neustarten von Protokollen der unteren Schicht umfasst, um bestehende Daten, die mit dem ersten SIM (104) assoziiert sind, erneut zu senden.

13. Benutzergerät (100) nach einem der Ansprüche 1 bis 8, wobei das Wiederherstellen der Verbindung zum Netzwerk unter Verwendung eines bestehenden Kontexts von der ersten drahtlosen Übertragung für das erste SIM (104) durchgeführt wird.

14. Verfahren zur Teilnehmerverwaltung gemäß einem Dual-SIM-Dual-Standby-, DSDS-, Protokoll in einer Benutzergerät-, UE-, Vorrichtung (100) mit einem einzelnen Sendeempfänger (102), wobei das Verfahren umfasst:
Steuern (401) des einzelnen Sendeempfängers (102), um das Empfangen einer ersten drahtlosen Übertragung von einem ersten drahtlosen Netzwerk, das mit einem ersten Teilnehmeridentitätsmodul, SIM (104), assoziiert ist, ohne einen Netzwerk-Handshake mit dem ersten drahtlosen Netzwerk einzustellen, und um eine zweite drahtlose Übertragung an ein zweites drahtloses Netzwerk zu übertragen, das mit einem zweiten SIM (106) assoziiert ist;
als Reaktion darauf, dass das zweite SIM (106) die zweite drahtlose Übertragung beendet und den Betrieb des einzelnen Sendeempfängers (102) an das erste SIM (104) zurückgibt (402), Starten der Netzwerküberwachung sowohl für das erste SIM (104) als auch für das zweite SIM (106); und
als Reaktion auf das Starten der Netzwerküberwachung, Wiederherstellen einer Verbindung mit dem ersten drahtlosen Netzwerk durch Durchführen einer Verfolgungsbereichsaktualisierung (tracking area update), TAU, oder einer Routingbereichsaktualisierung (routing area update), RAU, in Bezug auf das erste drahtlose Netzwerk, wobei das Durchführen der TAU oder der RAU die Auflösung einer Zustandsfehlanpassung zwischen dem ersten SIM (104) und dem ersten drahtlosen Netzwerk einleitet, wobei die Zustandsfehlanpassung eine Fehlanpassung zwischen einem tatsächlichen Zustand der Netzwerküberwachung durch das erste SIM (104) und einem angenommenen Zustand ist, der durch das erste drahtlose Netzwerk gehalten wird.

15. Nichtflüchtiges computerlesbares Medium, das Anweisungen zum Durchführen einer Teilnehmerverwaltung gemäß einem Dual-SIM-Dual-Standby-, DSDS-, Protokoll in einer Benutzergerät-, UE-, Vorrichtung (100) mit einem einzelnen Sendeempfänger (102) speichert, wobei die Anweisungen, wenn sie durch einen oder mehrere Prozessoren (108) ausgeführt werden, den einen oder die mehreren Prozessoren (108) veranlassen zum:
Steuern (401) des einzelnen Sendeempfängers (102), um das Empfangen einer ersten drahtlosen Übertragung von einem ersten drahtlosen Netzwerk, das mit einem ersten Teilnehmeridentitätsmodul, SIM (104), assoziiert ist, ohne einen Netzwerk-Handshake mit dem ersten drahtlosen Netzwerk einzustellen, und um eine zweite drahtlose Übertragung an ein zweites drahtloses Netzwerk zu übertragen, das mit einem zweiten SIM (106) assoziiert ist;
als Reaktion darauf, dass das zweite SIM (106) die zweite drahtlose Übertragung beendet und den Betrieb des einzelnen Sendeempfängers (102) an das erste SIM (104) zurückgibt (402), Starten der Netzwerküberwachung sowohl für das erste SIM (104) als auch für das zweite SIM (106); und
als Reaktion auf das Starten der Netzwerküberwachung, Wiederherstellen einer Verbindung mit dem ersten drahtlosen Netzwerk durch Durchführen einer Verfolgungsbereichsaktualisierung (tracking area update), TAU, oder einer Routingbereichsaktualisierung (routing area update), RAU, in Bezug auf das erste drahtlose Netzwerk, wobei das Durchführen der TAU oder der RAU die Auflösung einer Zustandsfehlanpassung zwischen dem ersten SIM (104) und dem ersten drahtlosen Netzwerk einleitet, wobei die Zustandsfehlanpassung eine Fehlanpassung zwischen einem tatsächlichen Zustand der Netzwerküberwachung durch das erste SIM (104) und einem angenommenen Zustand ist, der durch das erste drahtlose Netzwerk gehalten wird.

## Revendications

1. Un équipement utilisateur (100) comprenant :
un émetteur-récepteur unique (102), configuré pour fonctionner selon un protocole double SIM et double veille, DSDS ; et
un ou plusieurs processeurs (108) configurés pour :
contrôler (401) l'émetteur-récepteur unique (102) pour interrompre la réception d'une première transmission sans fil provenant d'un premier réseau sans fil associé à un premier module d'identité d'abonné, SIM (104), sans établissement de liaison réseau avec le premier réseau sans fil, et pour transmettre une deuxième transmission sans fil à un deuxième réseau sans fil associé à un deuxième SIM (106) ;
en réponse au deuxième SIM (106) qui termine la deuxième transmission sans fil et au retour (402) au fonctionnement de l'émetteur-récepteur unique (102) sur le premier SIM (104), démarrer la surveillance réseau à la fois pour le premier SIM (104) et le deuxième SIM (106) ; et
en réponse audit démarrage de la surveillance réseau, rétablir une connexion au premier réseau sans fil en réalisant une mise à jour de zone de suivi, TAU, ou une mise à jour de zone de routage, RAU, par rapport au premier réseau sans fil, dans lequel ladite réalisation de la TAU ou la RAU lance une résolution d'une inadéquation d'état entre le premier SIM (104) et le premier réseau sans fil, dans lequel l'inadéquation d'état est une inadéquation entre un état réel de surveillance réseau par le premier SIM (104) et un état hypothétique maintenu par le premier réseau sans fil.

2. L'équipement utilisateur (100) selon la revendication 1, dans lequel les un ou plusieurs processeurs (108) sont configurés en outre pour recevoir un reste de la première transmission sans fil après la réalisation de la TAU ou la RAU.

3. L'équipement utilisateur (100) selon la revendication 1, dans lequel les un ou plusieurs processeurs (108) sont configurés en outre pour reprendre la première transmission sans fil après la réalisation de la TAU ou la RAU.

4. L'équipement utilisateur (100) selon une des revendications 1 à 3, dans lequel le premier SIM (104) et le deuxième SIM (106) sont des SIM intégrés.

5. L'équipement utilisateur (100) selon la revendication 4, dans lequel ledit démarrage de la surveillance réseau comporte le démarrage d'une surveillance de paging pour des appels de paging provenant du premier réseau sans fil.

6. L'équipement utilisateur (100) selon une des revendications 3 à 5, dans lequel ladite réalisation de la TAU ou la RAU comprend la réalisation de la TAU.

7. L'équipement utilisateur (100) selon une des revendications 1 à 6, dans lequel ladite réalisation de la TAU ou la RAU comprend la réalisation de la RAU.

8. L'équipement utilisateur (100) selon une des revendications 1 à 7, dans lequel l'état hypothétique représente une hypothèse par le premier réseau sans fil que l'équipement utilisateur (100) est hors couverture d'une première station de base du premier réseau sans fil.

9. L'équipement utilisateur (100) selon la revendication 1, dans lequel ladite transmission de la deuxième transmission sans fil comprend la réalisation d'un appel vocal, l'envoi d'un message de texte, l'envoi d'un SMS, ou n'importe quelle combinaison de ceux-ci.

10. L'équipement utilisateur (100) selon une des revendications 1 à 8, dans lequel ledit contrôle de l'émetteur-récepteur unique (102) comprend le changement de fonctionnement du premier SIM (104) vers le deuxième SIM (106).

11. L'équipement utilisateur (100) selon la revendication 10, dans lequel ledit contrôle de l'émetteur-récepteur unique (102) pour changer de fonctionnement déclenche l'inadéquation d'état.

12. L'équipement utilisateur (100) selon une des revendications 1 à 8, dans lequel ledit rétablissement de la connexion au réseau comprend le redémarrage de protocoles de couche inférieure pour envoyer à nouveau des données existantes associées au premier SIM (104).

13. L'équipement utilisateur (100) selon une des revendications 1 à 8, dans lequel ledit rétablissement de la connexion au réseau est réalisé en utilisant un contexte existant provenant de la première transmission sans fil pour le premier SIM (104).

14. Un procédé de gestion d'abonné selon un protocole double SIM et double veille, DSDS, dans un dispositif d'équipement utilisateur, UE, (100) ayant un émetteur-récepteur unique (102), le procédé comprenant :
le contrôle (401) de l'émetteur-récepteur unique (102) pour interrompre la réception d'une première transmission sans fil provenant d'un premier réseau sans fil associé à un premier module d'identité d'abonné, SIM (104), sans établissement de liaison réseau avec le premier réseau sans fil, et pour transmettre une deuxième transmission sans fil à un deuxième réseau sans fil associé à un deuxième SIM (106) ;
en réponse au deuxième SIM (106) qui termine la deuxième transmission sans fil et au retour (402) du fonctionnement de l'émetteur-récepteur unique (102) sur le premier SIM (104), le démarrage de la surveillance réseau à la fois pour le premier SIM (104) et le deuxième SIM (106) ; et
en réponse audit démarrage de la surveillance réseau, le rétablissement d'une connexion au premier réseau sans fil en réalisant une mise à jour de zone de suivi, TAU, ou une mise à jour de zone de routage, RAU, par rapport au premier réseau sans fil, dans lequel ladite réalisation de la TAU ou la RAU lance une résolution d'une inadéquation d'état entre le premier SIM (104) et le premier réseau sans fil, dans lequel l'inadéquation d'état est une inadéquation entre un état réel de surveillance réseau par le premier SIM (104) et un état hypothétique maintenu par le premier réseau sans fil.

15. Un support non transitoire lisible par calculateur stockant des instructions pour réaliser une gestion d'abonné selon un protocole double SIM et double veille, DSDS, dans un dispositif d'équipement utilisateur, UE, (100) ayant un émetteur-récepteur unique (102), dans lequel les instructions, quand elles sont exécutées par un ou plusieurs processeurs (108), amènent les un ou plusieurs processeurs (108) à réaliser : le contrôle (401) de l'émetteur-récepteur unique (102) pour interrompre la réception d'une première transmission sans fil provenant d'un premier réseau sans fil associé à un premier module d'identité d'abonné, SIM (104), sans établissement de liaison réseau avec le premier réseau sans fil associé, et pour transmettre une deuxième transmission sans fil à un deuxième réseau sans fil associé à un deuxième SIM (106) ; en réponse au deuxième SIM (106) qui termine la deuxième transmission sans fil et au retour (402) du fonctionnement de l'émetteur-récepteur unique (102) sur le premier SIM (104), le démarrage la surveillance réseau à la fois pour le premier SIM (104) et le deuxième SIM (106) ; et
en réponse audit démarrage de la surveillance réseau, le rétablissement d'une connexion au premier réseau sans fil en réalisant une mise à jour de zone de suivi, TAU, ou une mise à jour de zone de routage, RAU, par rapport au premier réseau sans fil, dans lequel ladite réalisation de la TAU ou la RAU lance une résolution d'une inadéquation d'état entre le premier SIM (104) et le premier réseau sans fil, dans lequel l'inadéquation d'état est une inadéquation entre un état réel de surveillance réseau par le premier SIM (104) et un état hypothétique maintenu par le premier réseau sans fil.
